# FASCICULE DE BREVET EUROPEEN

(11) **EP 0 691 314 B1**
(45) Date de publication et mention de la délivrance du brevet: **23.12.1998**
(21) Numéro de dépôt: 95401488.2
(22) Date de dépôt: 23.06.1995
(51) Int. Cl.: C04B 28/34, C04B 24/38

(54) **Ciments phosphomagnesiens comprenant des polysaccharides, des protéines végétales et leur mode de préparation**
Phosphomagnesiumzemente, die Polysaccharide und pflanzliche Proteine enthalten, und Verfahren zur Herstellung derselben
Phosphomagnesium cements comprising polysaccharides and vegetable proteins and method for preparing same

(30) Priorité: 24.06.1994 FR 9407813
(43) Date de publication de la demande: 10.01.1996
(73) Titulaire: RHODIA CHIMIE, 92408 Courbevoie Cédex (FR)
(72) Inventeur: Frouin, Laurent, F-94240 L'Hay les Roses (FR); Pera, Jean, F-69100 Villeurbanne (FR); Ambroise, Jean, F-69530 Brignais (FR)
(74) Mandataire: Delenne, Marc

(56) Documents cités:
- EP-A- 0 001 895
- EP-A- 0 368 722
- EP-A- 0 503 555
- EP-A- 0 505 096
- DE-A- 3 040 077
- DE-A- 4 109 916
- US-A- 2 216 251
- US-A- 4 772 326

## Description

La présente invention a pour objet des ciments phosphomagnésiens comprenant des polysaccharides d'origine végétale, animale ou bactérienne ou des protéines végétales, ainsi que leur mode de préparation.

L'invention a trait à des ciments hydrauliques particuliers, c'est-à-dire à des compositions, qui en présence d'eau, se solidifient.

Lors de l'opération de mélange avec l'eau, on constate un phénomène d'exothermicité. Dans le cas des ciments phosphomagnésiens, la température de réaction avec l'eau se situe aux alentours de 100°C. L'exothermicité de cette réaction pose un problème lors de l'application de ces compositions. En effet, dès que la réaction d'hydratation commence, la montée en température de la composition entraîne l'ébullition de l'eau contenue dans celle-ci. On constate alors un phénomène de ressuage de l'eau, se traduisant par l'apparition de bulles à la surface de la composition, puis d'un liquide à base d'eau et de divers constituants de la composition, se transformant par la suite en une croûte collante. Une diminution de la quantité d'eau (appelée aussi eau de gâchage) ne change rien à l'apparition de ce phénomène, ni à son importance.

Le ciment ainsi obtenu a perdu son homogénéité, d'une façon irréversible, diminuant de façon notable ses propriétés de résistance mécanique notamment.

La présente invention a donc pour objectif de proposer un ciment phosphomagnésien ne présentant pas ces inconvénients lors de la mise en contact avec l'eau, tout en conservant les propriétés avantageuses de tels ciments, telles que des propriétés mécaniques élevées.

Par ailleurs, la présente invention permet d'obtenir un ciment autolissant ou même autonivelant, c'est-à-dire que la surface de celui-ci peut être lisse sans avoir à utiliser de moyens particuliers.

La présente invention a donc pour objet un ciment susceptible d'être obtenu par mise en contact d'une phase liante à base d'au moins un composé du phosphore et d'au moins un composé du magnésium, avec au moins un additif choisi parmi les polysaccharides d'origine végétale, animale ou bactérienne et les protéines végétales, et de l'eau.

L'invention a de même pour objet un matériau composite à base d'un tel ciment et de fibres.

Un autre objet de l'invention est constitué par le procédé de préparation de ces ciments.

Mais d'autres avantages et caractéristiques de l'invention apparaîtront plus clairement à la lecture de la description et des exemples qui vont suivre.

Classiquement, les ciments sont constitués d'une phase liante comprenant le cas échéant, les additifs usuels dans le domaine. Bien qu'un terme différent soit utilisé pour définir des ciments comprenant des granulats, outre ladite phase liante et les éventuels additifs, pour plus de commodité, dans la description, le terme unique de "ciment" sera utilisé pour nommer ces deux types de compositions.

La phase liante du ciment selon l'invention comprend au moins un constituant à base de phosphore et au moins un constituant à base de magnésium.

Tous les composés du phosphore sont utilisables dans la mesure où ils comprennent du pentoxyde de phosphore, disponible directement ou sous la forme d'un précurseur.

Ainsi, à titre de composé à base de phosphore, on peut mentionner sans intention de se limiter, le pentoxyde de phosphore, l'acide phosphorique ou des dérivés comme l'acide orthophosphorique, l'acide pyrophosphorique, l'acide polyphosphorique, ou encore les sels de tels acides, comme les phosphates, les hydrogénophosphates, les orthophosphates, les pyrophosphates, les polyphosphates, les tripolyphosphates, les tétrapolyphosphates, d'aluminium, de calcium, de potassium, de magnésium, d'ammonium, ou leurs mélanges.

Il est à noter que les rejets contenant du phosphore des industries fabriquant des fertilisants, ou encore des aciéries (décapage de l'acier, traitement pour réduire la corrosion) peuvent être employés comme constituants à base de phosphore.

Selon un mode de réalisation particulier de l'invention, on utilise les sels des acides à base de phosphore mentionnés auparavant.

De préférence, on met en oeuvre des phosphates, des hydrogénophosphates de potassium, de magnésium, d'ammonium, ou leurs mélanges. D'une façon encore plus préférée, le constituant à base de phosphore est le dihydrogénophosphate d'ammonium.

Le constituant à base de phosphore peut se présenter sous une forme liquide ou de préférence solide.

Selon une première variante, le constituant se trouve sous la forme de particules dont la granulométrie est plus particulièrement d'au plus 300 µm. Il est à noter que cette valeur n'est pas critique et que, s'il est possible d'utiliser des constituants dont la taille des particules est supérieure à 300 µm, un broyage avant incorporation dans la composition selon l'invention peut être souhaitable.

Selon une seconde variante, le constituant est utilisé sous une forme adsorbée sur un support poreux. A titre de support, on peut mentionner par exemple les terres de diatomées, l'argile, la bentonite, la silice, l'alumine. L'adsorption est effectuée de manière connue en soi. Ainsi, d'une façon classique le constituant à base de phosphore, en solution ou en suspension, est mis en contact avec le support, sous agitation, puis la suspension résultante est chauffée de façon à faire évaporer le liquide en excès. Cette opération peut de même être réalisée par imprégnation du support dans un tambour ou sur disque tournant.

Le second élément de la phase liante est au moins un constituant à base de magnésium.

Tout composé à base de magnésium convient à la présente invention dans la mesure où il réagit avec le premier constituant, en présence d'eau.

A titre d'exemple, on peut citer comme convenant à la mise en oeuvre de l'invention, les constituants suivants : l'oxyde de magnésium, l'hydroxyde de magnésium, le carbonate de magnésium.

De préférence, on utilise un constituant à base d'oxyde de magnésium. Convient notamment la magnésie dite "dead burned" habituellement obtenue après calcination de carbonate de magnésium, à des températures supérieures à 1200 °C.

D'une façon avantageuse, ledit oxyde de magnésium peut être mis en oeuvre sous une forme pure ou peut éventuellement comprendre au moins un élément du type calcium, silicium, aluminium ou encore fer ; ces éléments se trouvant en général sous forme d'oxyde ou d'hydroxyde. A titre d'exemple de ce type de composé, on peut citer la dolomie, mélange comprenant notamment de l'oxyde de magnésium et de l'oxyde de calcium.

Si l'oxyde de magnésium est utilisé sous forme pure, la pureté dudit oxyde, est d'au moins 80 %.

On utilise de préférence un constituant à base de magnésium dont la surface spécifique est inférieure à 2 m²/g. Plus particulièrement, la surface spécifique est inférieure à 1 m²/g.

Par ailleurs, la granulométrie dudit constituant est habituellement comprise entre 10 et 500 µm. Il serait envisageable d'utiliser des composés dont la granulométrie se trouve en dehors de la gamme précitée, mais sans que cela n'apporte d'avantages particuliers. Ainsi, si la granulométrie est supérieure à 500 µm, une étape de broyage préalable à l'incorporation dans la composition peut être nécessaire. Par ailleurs, si la granulométrie desdits constituants était inférieure à 10 µm, on pourrait constater une modification des propriétés de la composition mise en contact avec l'eau. On peut notamment constater un accroissement de la vitesse de prise du ciment, sauf à augmenter la teneur en agent retardant la prise, dont il sera question dans la suite de la description. De ce fait, le ciment obtenu selon le procédé de l'invention pourrait être moins intéressant sur le plan de la mise en oeuvre ou sur le plan économique.

Il est à noter que les deux constituants décrits auparavant, s'ils se présentent sous forme solide, peuvent éventuellement faire l'objet d'une étape de broyage avant leur utilisation dans le procédé selon l'invention.

La proportion du constituant à base de magnésium (exprimée en poids de MgO) rapportée à celle du constituant à base de phosphore (exprimée en poids de P₂O₅) est plus particulièrement comprise entre 1 et 3.

La phase liante du ciment selon l'invention peut comprendre en outre un agent retardant la prise.

Plus particulièrement, cet agent est choisi parmi des composés susceptibles de complexer le magnésium.

Ces derniers peuvent être notamment des acides carboxyliques, tels que les acides citrique, oxalique, tartrique, des acides, esters ou sels contenant du bore, des acides, esters ou sels contenant du phosphore, comme le tripolyphosphate de sodium, le sulfate ferreux, le sulfate et lignosulfonate de sodium, le chlorure de zinc, I'acétate de cuivre, le gluconate de sodium, le sulfate acétate de sodium cellulose, le produit de la réaction du formaldéhyde avec l'aminolignosulfate, le dialdéhyde amidon, la N,N-diméthyloldihydroxyéthylène urée, les silicofluorures, le tal oil et le sucrose, ces composés étant pris seuls ou en mélange.

De préférence, on utilise, seuls ou en mélange, les acides carboxyliques, et de préférence, les acides, esters ou sels contenant du bore.

Ainsi, dans cette dernière catégorie de composés, on peut mentionner, sans intention de se limiter, l'acide borique et ses sels, tels que les sels de métaux alcalins, comme le sodium (borax), les sels d'amine ou d'ammonium. Les esters de l'acide borique conviennent aussi à la mise en oeuvre de l'invention, comme les trialkyloxyborates, les triaryloxyborates.

Selon un mode particulier, l'additif est mis en oeuvre sous la forme d'une poudre dont le diamètre moyen est de 10 à 200 µm.

La quantité d'agent retardant la prise varie entre 0 et 10 parties en poids par rapport à 100 parties en poids des deux constituants précités. De préférence cette quantité est comprise entre 0 et 5 parties en poids rapporté à la même référence.

Les ciments susceptibles d'être obtenus par le procédé selon l'invention peuvent en outre comprendre des granulats, en tant qu'éléments constitutifs.

A titre d'exemples de tels composés, on peut mentionner le sable, la silice, l'alumine, l'oxyde de zirconium, la dolomie brute, le minerai de chrome, le calcaire, le clinker, la vermiculite, la perlite. On peut de même utiliser les cendres volantes, la fumée de silice condensée.

Les cendres volantes pouvant être utilisées sont en général des cendres silicoalumineuses issues de la combustion dans les centrales thermiques notamment.

La granulométrie de ces cendres est habituellement comprise entre 0,5 et 200 µm.

La fumée de silice condensée, éventuellement constituant de la composition selon l'invention, présente en général une surface spécifique comprise entre 20 et 30 m²/g.

Selon l'application ultérieure du ciment, les granulats entrant dans la composition seront choisis soit parmi le sable, la silice ou les autres composés cités, soit parmi les cendres volantes ou la fumée de silice condensée, soit parmi un mélange de ces deux types de granulats.

Habituellement, la quantité de granulats dans le ciment selon l'invention est comprise entre 0 et 1000 parties en poids pour 100 parties en poids de phase liante.

Selon un mode de réalisation particulier, la quantité de sable, silice ou des autres composés cités dans cette liste, est généralement comprise entre 0 et 900 parties en poids rapporté à la même référence que précédemment. De plus, la quantité de fumée de silice condensée ou de cendres volantes est comprise entre 0 et 100 parties en poids.

Le ciment selon l'invention peut comprendre par ailleurs, à titre d'éléments constitutifs, un agent hydrofugeant.

Parmi ce type d'agents, on peut citer notamment les silicones sous la forme d'une solution, d'un solide, et de préférence sous la forme d'une résine, d'une huile ou d'une émulsion, de préférence, dans l'eau. Conviennent tout particulièrement les silicones comprenant essentiellement des motifs M (RSiO_{0,5}) et D (R₂SiO). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris entre 30 et 120.

La quantité de silicone utilisé dans le procédé selon l'invention est inférieure ou égale à 10 parties en poids pour 100 parties en poids de phase liante, et de préférence inférieure ou égale à 5 parties en poids.

Enfin, le ciment selon l'invention peut comprendre tous les additifs classiques, comme les fluidifiants, avec notamment le lignosulfonate de sodium et les condensés de naphtalène sulfonate, le naphtalène, le tripolyphosphate, l'hexamétaphosphate de sodium, l'hydrogénophosphate d'ammonium, la mélanine, les alkyles siliconates.

Des agents antimousse peuvent de même être des éléments constitutifs du ciment selon l'invention. A titre d'exemple, on peut citer notamment les antimousses à base de polydiméthyl-siloxanes.

D'une façon générale. de tels additifs ne représentent pas plus de 10 parties en poids pour 100 parties en poids de phase liante. De préférence, la quantité d'additifs est comprise entre 0 et 5 parties en poids.

La caractéristique essentielle du ciment est qu'il comprend un additif choisi parmi les polysaccharides d'origine végétale, animale ou bactérienne, les protéines végétales, ces composés étant seuls ou en mélange.

Les polysaccharides d'origine végétale convenant à la mise en oeuvre de l'invention sont plus particulièrement des produits dérivés de l'industrie amidonnière.

Ainsi, on peut utiliser de l'amidon modifié chimiquement et de préférence de la fécule de pomme de terre modifiée chimiquement. De tels produits sont bien connus et sont commercialisés notamment par les sociétés ROQUETTE, CERESTAR, AVEBE ou encore AMYLUM.

Parmi les polysaccharides d'origine animale, on peut mentionner le chitosame, la chitine.

A titre de polysaccharides d'origine bactérienne, on peut citer les biogommes obtenues par fermentation d'un hydrate de carbone sous l'action d'un micro-organisme du genre Xanthomonas, Pseudomonas Elodea ou d'Alcaligenes.

On peut donc utiliser en tant qu'additif au ciment selon l'invention, la gomme xanthane, obtenue par fermentation sous l'action de bactéries ou champignons du type Xanthomonas telles que Xanthomonas begoniae, Xanthomonas, campestris, Xanthomonas carotae, Xanthomonas heredae, Xanthomonas icanae, Xanthomonas malvacearum, Xanthomonas papavericola, Xanthomonas phaseoli, Xanthomonas pisi, Xanthomonas vasculorum, Xanthomonas vesicatoria, Xanthomonas vitians, Xanthomonas pelargonii. Ces gommes xanthanes se trouvent couramment sur le marché, par exemple sous les noms de RHEOFLOW, RHODOPOL, commercialisés par Rhône-Poulenc.

On peut de même utiliser des gommes gellan, obtenues par fermentation sous l'action de Pseudomonas Elodea, les gommes rhamsan et welan obtenues à partir d'Alcaligenes.

Un autre type d'additif entrant dans la composition selon l'invention est choisi parmi les protéines végétales. Conviennent tout particulièrement à l'invention, les protéines de maïs, et de préférence des protéines de pomme de terre. Ces produits sont notamment commercialisés par la société ROQUETTE.

Selon un premier mode particulier de réalisation de l'invention, on utilise en tant qu'additif un ou plusieurs polysaccharides d'origine végétale et une ou plusieurs protéines d'origine végétale.

De préférence, on utilise un additif comprenant un mélange de fécule modifiée chimiquement et d'au moins une protéine d'origine végétale.

Selon un second mode de réalisation de l'invention, on utilise en tant qu'additif un polysaccharide d'origine bactérienne, ou le mélange de tels composés.

La quantité d'additif entrant dans la composition du ciment selon l'invention est de 0,5 à 2 parties en poids par rapport à 100 parties en poids de phase liante.

La caractéristique du ciment selon l'invention est qu'il est susceptible d'être obtenu en mettant en contact la phase précédemment décrite, au moins un additif choisi parmi les polysaccharides d'origine animale, végétale ou bactérienne et les protéines végétales, et de l'eau.

La quantité d'eau ajoutée est telle que l'on obtienne une pâte plastique, homogène et malléable.

Celle-ci dépend de l'application ultérieure du ciment. En effet, si l'on désire faire des revêtements internes de tuyauterie, la composition est en général plus cohésive qu'un ciment destiné à constituer un revêtement de sol, ou la préparation de dalles ou panneaux.

En général la teneur en eau est inférieure à 30 % par rapport au poids de matières sèches.

Plus particulièrement et simplement à titre indicatif, la teneur en eau est inférieure à 15 % et, de préférence à 10 % pour des applications du type réparation d'ouvrages.

Dans le cas où l'on veut obtenir un coulis, cette teneur en eau est de l'ordre de 20 à 25%.

La mise en contact peut être effectuée selon toute méthode appropriée. Ainsi, on peut procéder en apportant tous les éléments constitutifs du ciment, et l'eau, simultanément ou séparément. Selon cette dernière possibilité, on prépare en général une composition comprenant la phase liante, les granulats, le cas échéant l'agent retardant et tout ou partie des additifs éventuels en général solides, précédemment cités. On mélange ensuite ladite composition avec de l'eau, celle-ci comprenant, si tel est le cas, les éléments non introduits dans l'étape antérieure de préparation de la composition, comme les additifs liquides notamment.

Il est à noter que l'on peut aussi envisager mettre en oeuvre des mélanges plus ou moins complets des éléments constitutifs du ciment, depuis le mélange des éléments au moment de l'application jusqu'à l'utilisation de mélanges pour lesquels, seule l'eau est à apporter.

L'essentiel du procédé est qu'il soit mis en oeuvre de façon à obtenir une répartition de tous les éléments constitutifs la plus homogène possible dans la masse du ciment.

Le mélange des éléments constitutifs se fait par tout moyen connu et de préférence dans des conditions cisaillantes, en utilisant par exemple un malaxeur.

L'opération de mélange est avantageusement effectuée à une température voisine de la température ambiante.

Les ciments obtenus par le procédé selon l'invention peuvent être utilisés dans la réfection rapide de routes, ponts, et pistes d'aéroport. Ainsi, ils sont utilisés pour obturer des craquelures, des trous ou recouvrir des zones dégradées. En effet, ces ciments, outre une bonne adhérence aux ciments dits de Portland, présentent des propriétés mécaniques de résistance à la flexion et à la compression importantes, les rendant particulièrement appropriés pour ce type d'applications.

Ils peuvent de même être employés en tant que revêtements de sols, de tuyauteries, résistants à la corrosion.

La présente invention a pour autre objet un matériau composite à base du ciment phosphomagnésien selon l'invention et de fibres.

A titre d'exemple de fibres convenables pour l'obtention dudit matériau, on peut citer les fibres en polyester, en polyaramide, comme par exemple le KEVLAR®, les fibres de carbone.

Des fibres de verre peuvent de même être utilisées pour l'obtention du matériau composite selon l'invention.

Toutes les fibres de verre employées habituellement dans les ciments conviennent. On peut donc employer des fibres alcali-résistantes, comme les fibres de verres spéciaux obtenus notamment par traitement avec du zirconium, de même que les fibres de verres sodo-calciques.

Cependant, d'une façon avantageuse, les fibres standard conviennent aussi à l'obtention de matériaux composites selon l'invention. Ainsi, les verres classiques comme les verres borosilicatés habituellement détruits en milieu alcalin.

Les fibres ont des longueurs variant de 5 mm à plusieurs centaines de millimètres.

La quantité de fibres dans le matériau composite selon l'invention est comprise entre 1 et 10 % par rapport au poids de matières sèches du ciment.

Les matériaux composites selon l'invention sont obtenus par mélange du ciment tel que décrit précédemment, avec les fibres.

Le mélange se fait dans les mêmes conditions de préparation du ciment et ne seront donc pas reprises ici.

La composition ainsi obtenue est coulée dans un moule approprié, pour donner des dalles ou des panneaux.

Les produits moulés sont ensuite mis à sécher, d'une façon avantageuse à une température voisine de la température ambiante.

Les matériaux composites selon l'invention peuvent être utilisés notamment pour donner des panneaux de façade. L'avantage de ces matériaux réside dans leur vitesse de fabrication, et principalement dans leur vitesse de séchage.

Des exemples concrets mais non limitatifs de l'invention vont maintenant être donnés.

Dans les exemples qui vont suivre, les modes opératoires utilisés pour la préparation de la composition selon l'invention et la préparation d'éprouvettes de ciment pour obtenir des valeurs de résistance en flexion et compression sont les suivants :

### Mesures de résistances mécaniques.

### Préparation d'éprouvette:

Après malaxage, le mortier est transvasé dans des moules en acier doux.

Le moule rempli est fixé sur un appareil à chocs dont le rôle est de mettre en place le mortier. Le fonctionnement est le suivant:

Le moule est fixé sur une table, mue par une came qui provoque à chaque tour une chute de 15 mm de haut. Une durée de 60 chocs a été fixée.

On démoule après une heure et les éprouvettes sont séchées à 21°C sous 50 % d'humidité relative.
La mesure de la résistance en flexion correspond à la mesure de la charge nécessaire pour casser une éprouvette placée sur une tête à 3 points. On réalise une valeur moyenne sur les trois éprouvettes préparées.
La mesure de la résistance en compression est obtenue en utilisant des éprouvettes cassées précédemment. Elles sont placées entre deux mâchoires de 4 x 4 cm et compressées jusqu'à éclatement.

Le résultat pris en compte est la valeur moyenne sur plusieurs morceaux.

### EXEMPLE 1

1/ Préparation de la phase liante
On mélange les composés suivants (valeurs données en parties en poids), dans un malaxeur :

| | | |
|---|---|---|
| NH₄H₂PO₄ (MAP B -Rhône-Poulenc) | 40 µm | 11,5 |
| MgO (Insulmag 4 -Steetley) | 20 µm | 13,5 |
| | Surface spécifique < 1 m²/g | |
| H₃BO_{3 :} (Prolabo) | 90 µm | 1 |

2/ Préparation du ciment:
A 450 g de la phase liante ainsi obtenue, on ajoute 1350 g de sable.
On ajoute ensuite 190 g d'eau dans laquelle on a préalablement introduit 4,5 g d'ALBUREX® N (Roquette) et 2,25 g de FORALYS® HTS (Roquette).
Après malaxage, le mélange résultant est mis en place sur une table à chocs, puis transvasé dans des moules en acier doux où 3 éprouvettes de mortier sont obtenues (éprouvettes prismatiques 40x40x160 mm³).
On démoule après 1 heure et les éprouvettes sont séchées à température ambiante pendant 17 heures.
3/ Mesure des propriétés mécaniques:
Résistance en flexion (3 éprouvettes) : (4,9 ± 0,2) MPa
Résistance en compression (6 éprouvettes) : (42,2 ± 0,6) MPa

### EXEMPLE 2

1/ Préparation du ciment:
   On prend 250 g de la phase liante préparée selon l'exemple 1 et on ajoute :
   * 200 g de cendres volantes de centrale thermique
   * 1350 g de sable.
   Au mélange obtenu, on ajoute 170 g d'eau et 2,5 g d'ALBUREX® N et 2,5 g de FORALYS® HTS.
   Après malaxage, le mélange résultant est mis en place sur une table à chocs, puis transvasé dans des moules en acier doux où 3 éprouvettes de mortier sont obtenues (éprouvettes prismatiques 40x40x160 mm³).
   On démoule après 1 heure et les éprouvettes sont séchées à température ambiante pendant 24 heures.
2/ Mesure des propriétés mécaniques:
   Résistance en flexion (3 éprouvettes) : (2,6 ± 0,1) MPa
   Résistance en compression (6 éprouvettes) : (17,2 ± 0,5) MPa

### EXEMPLE 3

1/ Préparation du ciment:
   On prend 200 g de la phase liante préparée selon l'exemple 1 et on ajoute 200 g de cendres volantes de centrale thermique.
   On ajoute ensuite au mélange obtenu 93 g d'eau et 2 g d'ALBUREX® N et 1 g de FORALYS® HTS.
   Après malaxage, le mélange résultant est mis en place dans des moules en Plexiglas, puis transvasé dans des moules en acier doux où 6 éprouvettes de mortier sont obtenues (éprouvettes cylindriques Φ = 20 mm ; H = 40 mm).
   On démoule après 1 heure et les éprouvettes sont séchées à température ambiante pendant 18 heures.
2/La mesure de la résistance en compression indique une valeur de (15,3 ± 1,5) MPa.

### EXEMPLE 4

1/ Préparation du ciment:
   On prend 450 g de la phase liante préparée selon l'exemple 1 et on ajoute 1350 g de sable.
   Au mélange obtenu, on ajoute 200 g d'eau et 4,5 g de RHEOFLOW® CD1 (Rhône-Poulenc).
   Après malaxage, le mélange résultant est mis en place sur une table à chocs, puis transvasé dans des moules en acier doux où 3 éprouvettes de mortier sont obtenues (éprouvettes prismatiques 40x40x160 mm³).
   On démoule après 1 heure et les éprouvettes sont séchées à température ambiante pendant 24 heures.
2/ Mesure des propriétés mécaniques:
   Résistance en flexion (3 éprouvettes) (5 ± 0,3) MPa
   Résistance en compression (6 éprouvettes) : (27 ± 0,5) MPa

### EXEMPLE 5

1/ Préparation du ciment:
   On procède comme dans l'exemple 4 excepté le fait que l'on ajoute du RHEOFLOW® CD4 en tant qu'additif.
2/ La mesure des propriétés mécaniques dans les mêmes conditions que précédemment donne :
   Résistance en compression (22 ± 0,6) MPa
   Résistance en flexion: (5 ± 0,3) MPa

### EXEMPLE 6

1/ Préparation du ciment:
   On procède comme dans l'exemple 4 mais l'additif utilisé est le KELCOCRETE® (Merck).
2/ La mesure des propriétés mécaniques, dans les mêmes conditions donne :
   Résistance en compression : (30 ± 0,6) MPa
   Résistance en flexion : (5 ± 0,2) MPa

### EXEMPLE 7

1/ Préparation d'un matériau composite
   On mélange les composés suivants (valeurs données en parties en poids):
   Pour 100 parties en poids de phase liante selon l'exemple 1, on ajoute 100 parties en poids de silice (Silice et Kaolin F15).
   On ajoute ensuite 25 % en poids d'eau par rapport au poids de phase liante et de silice à laquelle on a préalablement additionné 0,5 partie en poids de FORALYS® HTS et 0,5 partie en poids d'ALBUREX® N.
   Après malaxage, on ajoute 2,5 % en poids de fibres de verre borosilicaté par rapport au poids de phase liante et de silice, au mélange précédemment obtenu.
   Le mélange résultant est ensuite mis en place par vibration sur une table vibrante dans un moule PVC de dimensions 300x300x10 mm³ où 3 éprouvettes sont découpées à 24 heures.
2/ La mesure de la résistance en flexion (3 éprouvettes) donne une valeur de 12,6 MPa.
   Cette valeur est à comparer à celle de 10 MPa, trouvée sur un composite comprenant un ciment de Portland artificiel - fibres de verre, élaboré dans des conditions identiques, après 28 jours de mûrissement à une température de 20 °C sous une humidité relative de 95 %.

## Revendications

1. Ciment phosphomagnésien caractérisé en ce qu'il est susceptible d'être obtenu par mise en contact d'une phase liante à base d'au moins un composé du phosphore et d'au moins un composé du magnésium, avec au moins un additif choisi parmi les polysaccharides d'origine végétale, animale ou bactérienne et les protéines végétales, et de l'eau.

2. Ciment selon la revendication 1, caractérisé en ce que l'additif du type polysaccharide est choisi parmi la fécule modifiée chimiquement, les biogommes obtenues par fermentation d'un hydrate de carbone sous l'action d'un micro-organisme du genre Xanthomonas, Pseudomonas Elodea ou d'Alcaligenes.

3. Ciment selon l'une des revendications précédentes, caractérisé en ce que l'additif comprend un ou plusieurs polysaccharides d'origine végétale et une ou plusieurs protéines d'origine végétale.

4. Ciment selon la revendication précédente, caractérisé en ce que l'additif est un mélange de fécule modifiée chimiquement et d'au moins une protéine d'origine végétale.

5. Ciment selon l'une des revendications 1 ou 2, caractérisé en ce que l'additif est un polysaccharide d'origine bactérienne.

6. Ciment selon l'une quelconque des revendications précédentes, caractérisé en ce que la teneur en additif est de 0,5 à 2 parties en poids par rapport à 100 parties en poids de la phase liante.

7. Ciment selon l'une quelconque des revendications précédentes, caractérisé en ce qu'il comprend des granulats.

8. Ciment selon la revendication précédente, caractérisé en ce que la teneur en granulats est comprise entre 0 et 1000 parties en poids, rapporté à 100 parties en poids de phase liante.

9. Ciment selon l'une quelconque des revendications précédentes, caractérisé en ce que la teneur en eau est inférieure à 30 % en poids, rapporté au poids de matières sèches.

10. Matériau composite à base du ciment selon l'une quelconque des revendications précédentes et de fibres ne résistant pas dans des milieux alcalins.

11. Matériau composite selon la revendication précédente, caractérisé en ce que la teneur en fibres est comprise entre 1 et 10 % en poids par rapport au poids de matières sèches.

12. Procédé de préparation du ciment phosphomagnésien selon l'une quelconque des revendications 1 à 7, caractérisé en ce que l'on met en contact la phase liante, au moins un additif choisi parmi les polysaccharides d'origine végétale, animale ou bactérienne et les protéines végétales, et de l'eau.

13. Procédé de préparation d'un matériau composite selon l'une des revendications 10 ou 11, caractérisé en ce que l'on met en contact la phase liante comprenant un premier composé à base de phosphore et un second composé à base de magnésium, au moins un additif choisi parmi les polysaccharides d'origine végétale, animale ou bactérienne et les protéines végétales, les fibres et de l'eau.

## Claims

1. Phosphorus/magnesium cement, characterized in that it can be obtained by bringing a binding phase, based on at least one phosphorus compound and on at least one magnesium compound, into contact with at least one additive, chosen from polysaccharides of plant, animal or bacterial origin and plant proteins, and water.

2. Cement according to claim 1, characterized in that the additive of the polysaccharide type is chosen from chemically modified starch or from biogums obtained by fermentation of a carbohydrate under the action of a microorganism of the genus Xanthomonas, Pseudomonas elodea or of Alcaligenes.

3. Cement according to either of the preceding claims, characterized in that the additive comprises one or more polysaccharides of plant origin and one or more proteins of plant origin.

4. Cement according to the preceding claim, characterized in that the additive is a mixture of chemically modified starch and of at least one protein of plant origin.

5. Cement according to either of claims 1 and 2, characterized in that the additive is a polysaccharide of bacterial origin.

6. Cement according to any one of the preceding claims, characterized in that the content of additive is from 0.5 to 2 parts by weight with respect to 100 parts by weight of the binding phase.

7. Cement according to any one of the preceding claims, characterized in that it comprises aggregates.

8. Cement according to the preceding claim, characterized in that the content of aggregates is between 0 and 1000 parts by weight with respect to 100 parts by weight of binding phase.

9. Cement according to any one of the preceding claims, characterized in that the content of water is less than 30% by weight with respect to the weight of dry matter.

10. Composite material based on the cement according to any one of the preceding claims and on fibres unresistant in alkaline media.

11. Composite material according to the preceding claim, characterized in that the content of fibres is between 1 and 10% by weight with respect to the weight of dry matter.

12. Process for the preparation of the phosphorus/magnesium cement according to any one of claims 1 to 7, characterized in that the binding phase, at least one additive, chosen from polysaccharides of plant, animal or bacterial origin and plant proteins, and water are brought into contact.

13. Process for the preparation of a composite material according to either of claims 10 and 11, characterized in that the binding phase, comprising a first phosphorus-based compound and a second magnesium-based compound, at least one additive, chosen from polysaccharides of plant, animal or bacterial origin and plant proteins, the fibres and water are brought into contact.

## Patentansprüche

1. Phosphomagnesiumzement, dadurch gekennzeichnet, daß er geeignet ist, durch In-Kontakt-Bringen einer Bindemittel-Phase auf der Basis von mindestens einer Phosphorverbindung und mindestens einer Magnesiumverbindung mit mindestens einem Zusatzstoff, ausgewählt unter den Polysacchariden pflanzlichen, tierischen oder bakteriellen Ursprungs und den pflanzlichen Proteinen, und Wasser erhalten zu werden.

2. Zement nach Anspruch 1, dadurch gekennzeichnet, daß der Zusatzstoff vom Typ Polysaccharid ausgewählt wird unter chemisch modifizierter Stärke und den Biogummis, erhalten durch Fermentation eines Kohlenhydrates unter der Einwirkung eines Mikroorganismus der Gattung Xanthomonas, Pseudomonas Elodea oder Alcaligenes.

3. Zement nach einem der vorstehenden Ansprüche, dadurch gekennzeichnet, daß der Zusatzstoff ein oder mehrere Polysaccharide pflanzlichen Ursprungs und ein oder mehrere Proteine pflanzlichen Ursprungs umfaßt.

4. Zement nach dem vorstehenden Anspruch, dadurch gekennzeichnet, daß der Zusatzstoff eine Mischung von chemisch modifizierter Stärke und mindestens einem Protein pflanzlichen Ursprungs ist.

5. Zement nach einem der Ansprüche 1 oder 2, dadurch gekennzeichnet, daß der Zusatzstoff ein Polysaccharid bakteriellen Ursprungs ist.

6. Zement nach irgendeinem der vorstehenden Ansprüche, dadurch gekennzeichnet, daß der Gehalt an Zusatzstoff 0,5 bis 2 Gewichtsteile betragt, bezogen auf 100 Gewichtsteile der Bindemittel-Phase.

7. Zement nach irgendeinem der vorstehenden Ansprüche, dadurch gekennzeichnet, daß er Granulate umfaßt.

8. Zement nach dem vorstehenden Anspruch, dadurch gekennzeichnet, daß der Gehalt an Granulaten zwischen 0 und 1000 Gewichtsteilen beträgt, bezogen auf 100 Gewichtsteile der Bindemittel-Phase.

9. Zement nach irgendeinem der vorstehenden Ansprüche, dadurch gekennzeichnet, daß der Gehalt an Wasser unter 30 Gew.-% liegt, bezogen auf das Gewicht der Trockensubstanzen.

10. Zusammensetzung auf der Basis des Zementes nach irgendeinem der vorstehenden Ansprüche und von Fasern, die in alkalischen Medien nicht resistent sind.

11. Zusammensetzung nach dem vorstehenden Anspruch, dadurch gekennzeichnet, daß der Gehalt an Fasern zwischen 1 und 10 Gew.-% beträgt, bezogen auf das Gewicht der Trockensubstanzen.

12. Verfahren zur Herstellung des Phosphomagnesiumzementes nach irgendeinem der Ansprüche 1 bis 7, dadurch gekennzeichnet, daß man die Bindemittel-Phase, mindestens einen Zusatzstoff, ausgewählt unter den Polysacchariden pflanzlichen, tierischen oder bakteriellen Ursprungs und den pflanzlichen Proteinen, und Wasser in Kontakt bringt.

13. Verfahren zur Herstellung einer Zusammensetzung nach einem der Ansprüche 10 oder 11, dadurch gekennzeichnet, daß man die Bindemittel-Phase, die eine erste Verbindung auf der Basis von Phosphor und eine zweite Verbindung auf der Basis von Magnesium umfaßt, mindestens einen Zusatzstoff, ausgewählt unter den Polysacchariden pflanzlichen, tierischen oder bakteriellen Ursprungs und den pflanzlichen Proteinen, Fasern und Wasser in Kontakt bringt.
